(19) Europäisches Patentamt
European Patent Office
Office européen des brevets

(11) **EP 4 711 173 A1**

(12) **DEMANDE DE BREVET EUROPEEN**

(43) Date de publication:
**18.03.2026  Bulletin 2026/12**

(21) Numéro de dépôt: **25191684.7**

(22) Date de dépôt: **24.07.2025**

(51) Classification Internationale des Brevets (IPC):
**B60K 35/10** (2024.01)    **B60K 35/26** (2024.01)
**G06F 40/30** (2020.01)    **G10L 13/02** (2013.01)
**G10L 13/027** (2013.01)    **G10L 15/22** (2006.01)
**G06F 40/35** (2020.01)    **G10L 15/26** (2006.01)

(52) Classification Coopérative des Brevets (CPC):
**B60K 35/10; B60K 35/265; G06F 40/35;
G10L 15/22;** B60K 2360/148; B60K 2360/161;
B60W 2540/049; B60W 2540/21; B60W 2540/22;
G06F 40/216; G06F 40/279; G10L 15/26;
G10L 2015/223; G10L 2015/228

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **17.09.2024  FR 2409909**

(71) Demandeurs:
• **Stellantis Auto SAS
78300 Poissy (FR)**
• **FCA US LLC
Auburn Hills, MI 48326-2766 (US)**

(72) Inventeurs:
• **MARCATEL, MATTHIEU
94100 ST MAUR DES FOSSES (FR)**
• **ANDREONE, LUISA
10043 ORBASSANO (IT)**
• **MARCHETTI, MARCO
10043 ORBASSANO (IT)**

(74) Mandataire: **ESIP
Stellantis Auto SAS
Service REIP - YT800
43, rue Jean Pierre Timbaud
78300 Poissy (FR)**

(54) **PROCÉDÉ DE CONTRÔLE D'UN SYSTÈME DE DIFFUSION SONORE DANS UN HABITACLE D'UN VÉHICULE D'UN MESSAGE RELATIF À DES INFORMATIONS EXPLICATIVES DE FONCTIONS ADAS OU DE CONDUITE AUTOMATISÉE DU VÉHICULE**

(57)      La présente invention concerne un procédé et dispositif de contrôle d'un système de diffusion sonore dans un habitacle d'un véhicule de message relatif à des informations explicatives de fonctions d'aide à la conduite du véhicule. Le procédé obtient (51, 52, 53) une troisième donnée à partir d'une première donnée de type texte représentative d'une question posée par un occupant du véhicule et relative à des informations explicatives de l'une desdites fonction d'aide à la conduite du véhicule ou de conduite automatisée du véhicule, et d'une deuxième donnée de type texte relative à un contexte actuel de conduite du véhicule. Le procédé obtient (54, 55) une quatrième donnée représentative d'une réponse relative aux informations explicatives des fonctions d'aide à la conduite du véhicule ou de conduite automatisée du véhicule correspondantes à la troisième donnée et contrôle (56) la diffusion de la quatrième donnée dans l'habitacle du véhicule.

[**Fig. 5**]

## Description

### Domaine technique

La présente invention concerne le contrôle d'un système de diffusion sonore, dans un habitacle d'un véhicule, de message relatif à des informations explicatives de fonctions d'aide à la conduite du véhicule ou de conduite automatisée du véhicule.

### Arrière-plan technologique

Les véhicules modernes embarquent différents systèmes d'aide à la conduite, dits systèmes ADAS (de l'anglais « Advanced Driver-Assistance System » ou en français « Système d'aide à la conduite avancé ») ou encore systèmes de conduite automatisée, pour accompagner le conducteur d'un tel véhicule dans le contrôle de la conduite du véhicule, voire pour remplacer le conducteur dans un mode de conduite autonome du véhicule.

Dans la plus part des cas, les fonctions ADAS, c'est-à-dire les fonctions d'aide à la conduite mises en œuvre par les systèmes ADAS, et les fonctions de conduite automatisée, c'est-à-dire mises en œuvre par les systèmes de conduite automatisée, ne sont pas faciles à comprendre et à gérer par certains conducteurs, en particulier dans des situations de conduite exigeantes. Il en résulte un manque de confiance de ces conducteurs en ces systèmes ADAS et de conduite automatisée, voire de défiance, notamment dû à une mauvaise connaissance de ces systèmes et de leur influence sur le comportement du véhicule. La prise de conscience par ces conducteurs du fonctionnement et des avantages de ces fonctions ADAS et de ces fonctions de conduite automatisée est donc primordial pour que les systèmes ADAS et de conduite automatisée soient adoptés par ces conducteurs et qu'ils soient correctement utilisés.

Pour qu'un conducteur d'un véhicule prenne conscience du fonctionnement et des avantages de fonctions ADAS et des fonctions de conduite automatisée mises en œuvre dans ce véhicule, il peut s'avérer utile de fournir des informations explicatives de ces fonctions ADAS et de conduite automatisée en condition réelle de circulation, c'est-à-dire lorsque le conducteur conduit ce véhicule.

Il existe des solutions pour fournir ces informations explicatives en condition réelle de circulation. Ces solutions interagissent avec le conducteur mais ne sont ni contextualisées, c'est-à-dire qu'elles ne tiennent pas compte du contexte dans lequel se déroule un trajet du véhicule, ni personnalisées, c'est-à-dire qu'elle ne tiennent pas compte du conducteur du véhicule ni des autres occupants du véhicule. Ces solutions existantes fournissent des mêmes informations explicatives dès qu'un occupant du véhicule le demande et ce quel que soit le contexte.

## Résumé de la présente invention

Un objet de la présente invention est de résoudre au moins l'un des problèmes de l'arrière-plan technologique décrit précédemment.

Selon un premier aspect, la présente invention concerne un procédé de contrôle d'un système de diffusion sonore dans un habitacle d'un véhicule, de message relatif à des informations explicatives de fonctions d'aide à la conduite du véhicule ou de conduite automatisée du véhicule, ledit procédé étant mis en œuvre par au moins un processeur et comprenant les étapes suivantes :

- obtention, via un système de reconnaissance vocale, d'une première donnée de type texte représentative d'une question posée par un occupant du véhicule et relative à des informations explicatives de l'une desdites fonctions d'aide à la conduite du véhicule ou de conduite automatisée du véhicule ;
- obtention, à partir d'au moins un système de capture de données contextuelles, d'une deuxième donnée de type texte relative à un contexte actuel de conduite du véhicule ;
- obtention, à partir d'un système de fusion de données de type texte, d'une troisième donnée de type texte à partir de la première donnée et de la deuxième donnée toutes deux de type texte ;
- soumission de la troisième donnée à un système conversationnel basé sur un modèle de langage ayant accès à une base de donnée comprenant des données représentatives des informations explicatives des fonctions d'aide à la conduite du véhicule ou de conduite automatisée du véhicule ;
- obtention, à partir du système conversationnel, d'une quatrième donnée représentative d'une réponse relative aux informations explicatives des fonctions d'aide à la conduite du véhicule ou de conduite automatisée du véhicule de la base de données correspondantes à la troisième donnée ;
- contrôle du système de diffusion sonore pour diffusion la quatrième donnée dans l'habitacle du véhicule.

La mise en œuvre du procédé permet de créer un compagnon virtuel du conducteur qui apprend au conducteur à utiliser de manière optimale les fonctions ADAS et d'automatisation du véhicule en fonction du contexte actuel de conduite du véhicule.

Le procédé propose au conducteur un parcours éducatif sur la façon dont les fonctions ADAS et de conduite automatisée peuvent être bénéfiques pour le confort du conducteur et des occupants du véhicule et sur la façon dont les fonctions ADAS et de conduite automatisée peuvent fournir des avertissements anticipés / des manœuvres automatisées pour des situations de conduite qui peuvent être éventuellement risquées.

Mais le procédé n'indique pas au conducteur ce qu'il doit faire car la responsabilité des actions et de leurs effets incombent au conducteur.

Le système conversationnel est basé sur un modèle de langage ayant accès à une base de données comprenant les informations explicatives des fonctions ADAS et de conduite automatisée. Un tel système met ainsi en œuvre un système de question/réponse dont les interactions avec le conducteur sont fluides.

Le procédé est empathique c'est-à-dire qu'il fournit des informations explicatives des fonctions ADAS et de conduite automatisée qui sont personnalisées selon un contexte actuel du véhicule. Le conducteur du véhicule peut ainsi être éduqué sans obligation ni contrainte ce qui contribue à l'adoption par ce conducteur des systèmes ADAS et de conduite automatisée. Par exemple, une interaction avec le procédé peut être initiée dès qu'une fonction ADAS ou de conduite automatisée est en action. Des informations explicatives relatives à cette fonction ADAS telles que des informations relatives au scénario/contexte, peuvent alors être diffusées dans l'habitacle du véhicule lors de l'activation de la fonction pour améliorer l'explication du comportement de la fonction ADAS ou de conduite automatisée, la raison pour laquelle elle est activée et la manière dont le conducteur peut l'utiliser au mieux.

Par ailleurs, l'utilisation de données représentatives d'un contexte actuel du véhicule permet de fournir des interactions éducatives les plus appropriées avec le conducteur à tout moment et en tout lieu lorsque ce dernier n'est pas occupé à d'autres tâches.

Selon un exemple de réalisation particulier et non limitatif de la présente invention, la deuxième donnée comprend au moins un mot ou une séquence de mots du langage naturel représentatif d'un contexte extérieur au véhicule, ledit contexte extérieur étant obtenu à partir d'une position géographique courante du véhicule.

Selon un exemple de réalisation particulier et non limitatif de la présente invention, le contexte extérieur est défini par l'une des données suivantes ou l'une de leurs combinaisons ;

- une donnée représentative d'un scénario de conduite ;
- une donnée représentative de conditions de circulation routière et environnementales.

Le procédé est alors avantageux car les informations explicatives de fonctions d'aide à la conduite du véhicule ou de conduite automatisée du véhicule sont choisies et diffusées en fonction du contexte extérieur actuel du véhicule c'est-à-dire en fonction du scénario de conduite actuel, de l'environnement routier actuel autour du véhicule et des conditions actuelles de circulation routière et environnementale.

Selon un exemple de réalisation particulier et non limitatif de la présente invention, la deuxième donnée comprend un mot ou une séquence de mots du langage naturel représentatif d'un contexte intérieur du véhicule, ledit contexte intérieur étant obtenu à partir d'au moins un capteur embarqué du véhicule.

Selon un exemple de réalisation particulier et non limitatif de la présente invention, le contexte intérieur est défini par l'une des données suivantes ou l'une de leurs combinaisons :

- une donnée représentative d'une vitesse du véhicule ;

- une donnée représentative d'une accélération du véhicule ;

- une donnée représentative d'une activation de l'une des fonctions d'aide à la conduite du véhicule ou de conduite automatisée du véhicule ;

- une donnée représentative d'une émotion du conducteur du véhicule ;

- une donnée représentative du nombre d'occupants du véhicule ;

- une donnée représentative d'un nombre d'occupants du véhicule en train de discuter ;

- une donnée représentative d'un environnement routier autour du véhicule.

Le procédé est alors avantageux car les informations explicatives de fonctions d'aide à la conduite du véhicule ou de conduite automatisée du véhicule sont choisies et diffusées en fonction du contexte intérieur actuel du véhicule c'est-à-dire en fonction de l'attitude de conduite du conducteur et selon les autres occupants du véhicule et de leurs relations avec le conducteur.

Selon un exemple de réalisation particulier et non limitatif de la présente invention, le modèle de lange comprend un réseau de neurones profond entrainé.

Selon un deuxième aspect, la présente invention concerne un dispositif de contrôle d'un système de diffusion sonore dans un habitacle d'un véhicule, de message relatif à des informations explicatives de fonctions d'aide à la conduite du véhicule ou de conduite automatisée du véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, une mémoire RAM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un environnement de mise en œuvre de la présente invention dans un véhicule.

[Fig. 2] illustre schématiquement une phase d'apprentissage du modèle de langage, selon un exemple de réalisation particulier et non limitatif de la présente invention.

[Fig. 3] illustre schématiquement un réseau de neurones profonds basé sur une architecture de type transformeur selon un exemple de réalisation particulier et non limitatif de la présente invention.

[Fig. 4] illustre schématiquement un dispositif configuré pour contrôler un système de diffusion sonore dans un habitacle d'un véhicule de message relatif à des informations explicatives de fonctions d'aide à la conduite du véhicule ou de conduite automatisée du véhicule, selon un exemple de réalisation particulier et non limitatif de la présente invention.

[Fig. 5] illustre un organigramme des différentes étapes d'un procédé de contrôle d'un système de diffusion sonore dans un habitacle d'un véhicule de message relatif à des informations explicatives de fonctions d'aide à la conduite du véhicule ou de conduite automatisée du véhicule, selon un exemple de réalisation particulier et non limitatif de la présente invention.

**Description des exemples de réalisation**

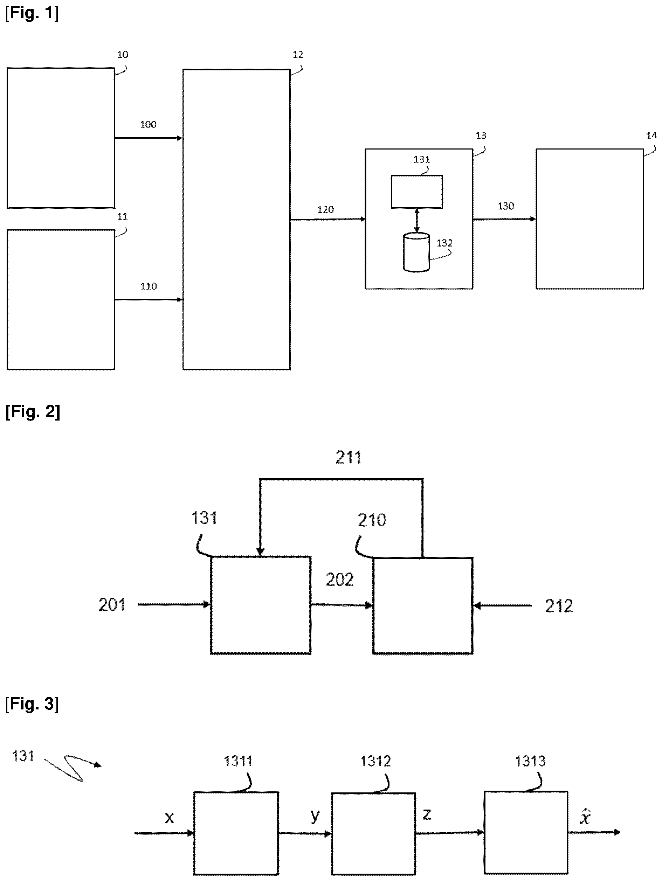

Un procédé et un dispositif de contrôle d'un système de diffusion sonore dans un habitacle d'un véhicule de message relatif à des informations explicatives de fonctions d'aide à la conduite du véhicule ou de conduite automatisée du véhicule, vont maintenant être décrits dans ce qui va suivre en référence conjointement aux figures 1 à 5. Des mêmes éléments sont identifiés avec des mêmes signes de référence tout au long de la description qui va suivre.

Les termes « premier(s) », « deuxième(s) » (ou « première(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Un véhicule, selon la présente invention, correspond par exemple à un véhicule à moteur thermique, à moteur(s) électrique(s) ou encore un véhicule hybride avec un moteur thermique et un ou plusieurs moteurs électriques. Le véhicule correspond ainsi par exemple à un véhicule terrestre, par exemple une automobile, un camion, un car.

La figure 1 illustre schématiquement un environnement de mise en œuvre de la présente invention dans un véhicule.

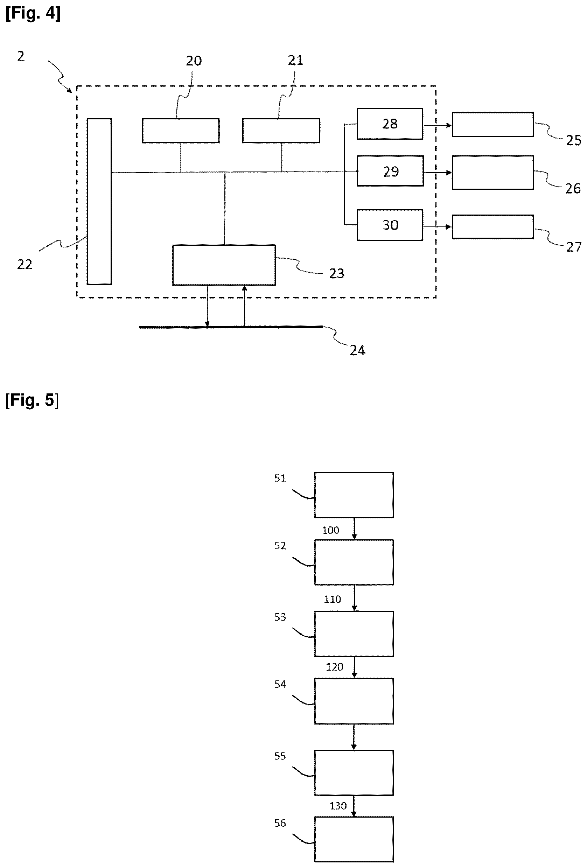

Le véhicule comprend un dispositif 2 de la figure 4.

Le véhicule comprend un système de reconnaissance vocale 10, un système de capture de données contextuelles 11, un système conversationnel 12, un système de fusion de données de type texte 13 et un système de diffusion sonore 14 dans l'habitacle du véhicule.

Le système de reconnaissance vocale 10 est configuré pour fournir une première donnée 100 de type texte représentative d'une question posée par un conducteur du véhicule et relative à des informations explicatives de l'une desdites fonction ADAS ou de conduite automatisée du véhicule.

Par exemple, le système de reconnaissance vocal 10 comprend au moins un microphone positionné dans l'habitacle et une unité de calcul configurée pour analyser la voix humaine captée par ledit au moins un microphone pour le retranscrire sous la forme de la première donnée 100 de type texte qui est exploitable pour le système de fusion de données de type texte 13.

Ces informations explicatives des fonctions ADAS ou de conduite automatisée du véhicule sont habituellement celles mentionnées dans un manuel du véhicule ou dans un carnet d'entretien du véhicule. Ces informations peuvent indiquer comment une fonction ADAS ou de conduite automatisée peut être activée ou désactivée, expliquer les effets de ces fonctions ou encore fournir des détails concernant le comportement du véhicule lorsque ces fonctions sont activées. Ces informations sont ici stockées sous forme numérique dans une base de données du véhicule. La base de données fournit un accès à ces informations sur requête. Cette requête prend la forme d'une troisième donnée 103 de type texte comme on le verra par la suite.

Le système de capture de données contextuelles 11 est configuré pour fournir un deuxième donnée 110 de type texte relative à un contexte actuel de conduite du véhicule. La deuxième donnée 110 est exploitable pour le système de fusion de données de type texte 13.

Selon un exemple de réalisation particulier et non limitatif de la présente invention, la deuxième donnée 110 peut comprendre au moins un mot ou une séquence de mots du langage naturel représentatif d'un contexte extérieur au véhicule, ledit contexte extérieur étant obtenu à partir d'une position géographique courante du véhicule.

Par exemple, la position géographique courante du véhicule est obtenue à partir d'un système de géolocalisation ou système GNSS (Géolocalisation et Navigation par un Système de Satellites), par exemple un système de type GPS (de l'anglais « Global Positioning System » ou en français « Système de géo-positionnement par satellites ») ou Galileo, embarqué du véhicule.

Par exemple, le contexte extérieur du véhicule peut être défini par l'une des données suivantes ou l'une de leurs combinaisons ;

- une donnée représentative d'un scénario de conduite ;

- une donnée représentative de conditions de circulation routière et environnementale.

La présente invention n'est pas limitée à ces exemples de définition de contexte extérieur du véhicule ni aux moyens mis en œuvre pour obtenir une deuxième donnée le définissant mais s'étend à tous moyens permettant de définir un contexte extérieur à un véhicule.

Par exemple, les mots urbain, extra-urbain et autoroutes peuvent indiquer différents scénarios de conduite. Le deuxième donnée 100 peut alors comprendre l'un de ces mots.

Par exemple, le véhicule peut comprendre un système de communication qui est configuré pour échanger des données avec un système distant configuré pour diffuser des bulletins météo et/ou des alertes et/ou des informations de trafic routier. Le système de communication embarqué du véhicule peut alors questionné ce système distant pour obtenir les données représentatives de conditions de circulation routière et environnementales. Une unité de calcul du véhicule peut alors être configurée pour traduire ces données représentatives de conditions de circulation routière et environnementale en un mot ou une séquence de mots du langage naturel et pour ajouter ces mot ou une séquence de mots du langage naturel à la deuxième données 110.

Selon un exemple de réalisation particulier et non limitatif de la présente invention, la deuxième donnée 110 peut comprendre un mot ou une séquence de mots du langage naturel représentatif d'un contexte intérieur du véhicule, ledit contexte intérieur étant obtenu à partir d'au moins un capteur embarqué du véhicule.

Par exemple, le contexte intérieur est défini par l'une des données suivantes ou l'une de leurs combinaisons :

- une donnée représentative d'une vitesse du véhicule ;

- une donnée représentative d'une accélération du véhicule ;

- une donnée représentative d'une activation de l'une des fonctions ADAS ou de conduite automatisée du véhicule ;

- une donnée représentative d'une émotivité du conducteur du véhicule ;

- une donnée représentative du nombre d'occupants du véhicule ;

- une donnée représentative d'un nombre d'occupants du véhicule en train de discuter ;

- une donnée représentative d'un environnement routier autour du véhicule.

La présente invention n'est pas limitée à ces exemples de définition de contexte intérieur du véhicule ni aux moyens mis en œuvre pour obtenir une deuxième donnée le définissant mais s'étend à tous moyens permettant de définir un contexte intérieur à un véhicule incluant tous types de capteurs et de données obtenus à partir de ces capteurs ou de leurs combinaisons.

Par exemple, un capteur de vitesse du véhicule peut être adapté pour fournir un mot ou une séquence de mots du langage naturel qui est représentatif de la vitesse courante du véhicule. La deuxième donnée 110 comprend alors ce mot ou séquence de mots du langage naturel. Basiquement, un capteur de vitesse classique peut être associé à une unité de calcul configurée pour traduire les vitesses données par le capteur de vitesse en un mot ou une séquence de mots. L'unité de calcul peut également être configurée pour traduire des vitesses mesurées consécutivement par le capteur de vitesse en un mot ou une séquence de mots représentatif d'une accélération de vitesse du véhicule. La deuxième donnée 110 comprend alors ce mot ou cette séquence de mots.

Par exemple, le véhicule peut comprendre un système de détection d'émotion du conducteur configuré pour déceler l'émotivité du conducteur basé sur une analyse d'image de visage du conducteur capturée par une caméra embarquée, en particulier des yeux, du nez et des lèvres. Le système de détection d'émotion peut être configuré pour fournir un mot du langage naturel représentatif de l'émotivité du conducteur tel que colère, dégoût, fier, heureux, neutre, triste, surpris,... La deuxième donnée 110 comprend alors ce mot.

Par exemple, le véhicule peut comprendre une unité de calcul configurée pour compter le nombre de ceintures de sécurité bouclées, c'est-à-dire le nombre d'occupants du véhicule. Cette unité de calcul peut alors configurée pour fournir un mot ou une séquence de mots du langage naturel représentatif de ce nombre d'occupants. La deuxième donnée 110 comprend alors ce mot ou une séquence de mots du langage naturel.

Par exemple, le système de reconnaissance vocale peut être configuré pour détecter si plusieurs occupants du véhicule discutent et pour fournir un mot ou une séquence de mots indiquant si plusieurs occupants discutent et/ou combien d'occupants sont en train de discuter. La deuxième donnée 110 comprend alors ce mot ou cette séquence de mots.

Par exemple, le véhicule peut comprendre un système de perception de l'environnement routier extérieur proche du véhicule. Ce système peut comprendre des capteurs de type LiDar par exemple et/ou des caméras associés à une unité de calcul configurée pour obtenir un mot ou une séquence de mots représentatif de l'environnement routier autour du véhicule. Cette donnée peut par exemple être un mot décrivant cet environnement tel que 'fluide', 'encombré', 'risqué', etc. La deuxième donnée 110 comprend alors ce mot.

Le système de fusion de données de type texte 12 est configurée pour fournir, à partir de la première donnée 100 et de la deuxième donnée 110 toutes deux de type texte, une troisième donnée 120 représentatif d'une requête de type texte formée d'un mot ou d'une séquence de mots.

Par exemple, la fusion consiste à concaténer la première donnée 100 avec la deuxième donnée 110.

Le système conversationnel 12 est basé sur un modèle de langage entrainé 131 ayant accès à une base de données 132 comprenant des données représentatives des informations explicatives des fonctions ADAS ou de conduite automatisée du véhicule.

Le système conversationnel 12 est configuré pour fournir une quatrième donnée 130 représentative d'une réponse relative aux informations explicatives des fonctions ADAS ou de conduite automatisée du véhicule de la base de données 132 correspondantes à la troisième donnée 120.

Le système de diffusion sonore 14 est configuré pour diffuser la quatrième donnée 130 dans l'habitacle du véhicule.

Par exemple, la quatrième donnée 130 est une donnée de type audio. Le système de diffusion sonore 14 comprend alors une unité de calcul configurée pour contrôler au moins un haut-parleur embarqué du véhicule de manière à ce que la quatrième donnée soit diffuser dans l'habitacle du véhicule.

Par exemple, si la quatrième donnée 130 est un mot ou un séquence de mots du langage naturel, le système de diffusion peut comprendre un synthétiseur vocal configuré pour convertir ce mot ou séquences de mots du langage naturel en donnée audio.

Le modèle de langage 131 est entrainé lors d'une phase d'apprentissage de la figure 2.

Dans une première opération de la phase d'apprentissage, des données textuelles 202 peuvent être générées en sortie du modèle de langage 131 à entrainer lorsqu'un ensemble de données textuelles d'entrainement 201 est présenté en entrée du modèle de langage 131 à entrainer.

Chaque donnée textuelle d'entrainement 201 peut être un mot ou une séquence de mots du langage naturel représentatif, d'une part, d'une question pouvant être posée par un occupant du véhicule et relative à des informations explicatives de l'une desdites fonction ADAS ou de conduite automatisée du véhicule et, d'autre part, d'un contexte (intérieur et/ou extérieur) du véhicule.

Chaque donnée textuelle d'entrainement 201 est associée avec une donnée textuelle 212 attendue.

Chaque donnée textuelle 202 (générée) ou attendue (212) peut être un mot ou une séquence de mots du langage naturel représentatif d'une réponse relative aux informations explicatives des fonctions ADAS ou de conduite automatisée du véhicule correspondantes à une donnée textuelle d'entrainement 201.

Dans une deuxième opération de la phase d'apprentissage, des paramètres internes du modèle de langage 131 à entrainer peuvent être ajustés pour minimiser une fonction de perte 211 quantifiant (210) des différences entre les données textuelle 202 générées en sortie du modèle de langage 131 à entrainer et les données textuelle 212 attendues.

Selon un exemple de réalisation particulier et non limitatif de la présente invention, la fonction de perte 211 est de type maximum de vraisemblance.

Selon un exemple de réalisation particulier et non limitatif de la présente invention, le modèle de langage 131 est un modèle LLM (en anglais Large Langage Model, en français modèle de langage de grande taille) c'est-à-dire un modèle de langage qui comprend un réseau de neurones profonds comprenant un nombre important de paramètres internes typiquement de l'ordre du milliard ou plus et un convertisseur de données textuelles en jetons et inversement.

Les modèles LLM sont des fonctions mathématiques dont l'entrée et la sortie sont des listes de nombres (jetons). Pour qu'ils acceptent des données textuelles en entrée et qu'il fournissent des textes en sortie, une conversion est appliquée à ces données textuelles pour obtenir des jetons (nombres) et une conversion est appliquée à des jetons pour obtenir des données textuelles à partir desquelles sont générés ces textes en sortie du modèle LLM. Cette conversion est mise en œuvre par une fonction bijective (appelée tokenizer en anglais) basée sur une mise en correspondance prédéfinie (vocabulaire). Cette fonction bijective est généralement d'abord adaptée à un ensemble de données textuelles d'entraînement complet, puis gelée, avant que le réseau de neurones profonds ne soit entraîné. Une autre caractéristique de la fonction bijective est de compresser les données textuelles présentées en entrée du modèle LLM pour épargner du temps de calcul lors de l'entrainement et l'inférence du réseau de neurones profonds.

Selon un exemple de réalisation particulier et non limitatif de la présente invention, illustré à la figure 3, le modèle LLM est un modèle LLM autorégressif basé sur une architecture de type transformeur tel que décrit, par exemple dans l'article de Vaswani et al. (Vaswani, A., Shazeer, N., Parmar, N., Uszkoreit, J., Jones, L., Gomez, A., Kaiser, u., & Polosukhin, I. (2017). Attention is All you Need. In Advances in Neural Information Processing Systems. Curran Associates, Inc.). L'architecture du transformeur est un modèle de réseau neuronal qui s'appuie sur des mécanismes d'auto-attention pour capturer les relations entre les jetons dans une séquence, permettant un traitement parallèle et un apprentissage efficace du contexte.

Basiquement, un modèle LLM autorégressif basé sur une architecture de type transformeur comprend un encodeur ('tokenizer' en anglais) 1311, un décodeur (également appelé 'tokenizer' en anglais) 1312 et un réseau de neurones profonds 1313. L'encodeur 1311 code des données textuelles x telles que des mots ou des phrases en langage naturel, qui sont présentes à son entrée du modèle LLM en une séquence de jetons y, c'est-à-dire des nombres ('token' en anglais), qui sont présents en entrée du réseau de neurones profonds, sur la base d'une mise en correspondance prédéfinie (encore appelé vocabulaire) entre des mots et/ou des phrases de langage naturel et des jetons. Le décodeur 1312 procède à l'opération inverse en décodant une séquence de jetons z (sortie du réseau de neurones profonds) pour obtenir des données textuelles $\hat{x}$ sur la base desquelles est généré un texte. Le réseau de neurones profonds 1313 fonctionne sur une séquence de jetons y en entrée (en sortie de l'encodeur) et génère une nouvelle séquence de jetons z en sortie (en entrée du décodeur).

Le réseau de neurones profonds 1313 comprend un ensemble de couches de neurones artificiels.

Par exemple, chaque neurone artificiel est un perceptron c'est-à-dire un classifieur linéaire comprenant généralement plusieurs entrées et une seule sortie et caractérisé par une fonction d'activation, des poids (ou coefficients synaptiques) et un biais (ou seuil).

Par exemple, un perceptron à n entrées ($x_1 \ldots$, $x_n$) et à une seule sortie o est défini par n poids ($w_1, \ldots, w_n$) et un biais (ou seuil) $\theta$ :

$$o = f(z) = \begin{cases} 1 & si \ \sum_{i=1}^{n} w_i x_i > 0 \\ 0 & sinon \end{cases}$$

La sortie o résulte alors de l'application de la fonction de Heaviside au potentiel post-synaptique z donné par :

$$z = \sum_{i=1}^{n} w_i x_i - \theta$$

avec une fonction non linéaire d'activation H(x) donnée par exemple par

$$\forall x \in \mathbb{R}, \ H(x) = \begin{cases} 0 & si \ x < 0 \\ 1 & si \ x > 1 \end{cases}$$

Les paramètres internes du réseau de neurones 1313 sont alors ces poids et biais pour l'ensemble des perceptrons.

La présente invention n'est pas limitée à cette définition de perceptron ni à l'utilisation de d'autres éléments de base formant une couche du réseau de neurones. Elle n'est pas non plus limitée au nombre de perceptrons (ou autres éléments de base) utilisés par couche ni par le nombre de couche. Les paramètres internes du réseau de neurones sont habituellement des poids et des biais quels que soient les éléments de base des couches du réseau de neurones.

Lors de la phase d'apprentissage du réseau de neurones profonds, le réseau de neurones profonds fournit un ensemble de jetons en sortie lorsqu'un ensemble de jetons est présenté à son entrée. L'ensemble de jetons en entrée et en sortie correspondent à des mots ou séquence de mots de langage naturel. Le réseau de neurones profonds est entrainé lorsqu'il fournit des ensemble de jetons en sortie qui correspondent à des mots ou séquences de mots attendus.

Plus précisément, pendant la phase d'apprentissage, les paramètres internes du réseau de neurones profonds du modèle de langage 131 sont optimisés à l'aide de l'estimation de la fonction de perte qui peut être de type maximum de vraisemblance. Le modèle de langage 131 calcule la distribution de probabilité sur un vocabulaire donné pour chaque jeton d'une séquence d'apprentissage présente en entrée du réseau de neurones profonds, et l'objectif est de maximiser la probabilité que le 'vrai' prochain jeton dans la séquence d'apprentissage soit prédit. Ceci est réalisé en minimisant une fonction de perte d'entropie croisée définie entre les probabilités prédites et le prochain jeton réel de la séquence d'apprentissage.

Selon un exemple de réalisation particulier et non limitatif de la présente invention, pendant la phase d'apprentissage, les paramètres internes du réseau de neurones profonds 1313 peuvent être optimisés par rétropropagation et descente de gradient basé, par exemple, sur la méthode décrite par Robbins et Monro (Robbins, H. and S. Monro (1951). "A Stochastic Approximation Method." In The Annals of Mathematical Statistics 22.3, pp. 400-407 ).

La phase d'apprentissage se poursuit jusqu'à ce que le réseau de neurones profonds 1313 du modèle de langage 131 atteigne un niveau de performance satisfaisant pour prédire le prochain jeton d'une séquence de jeton.

Selon un exemple de réalisation particulier et non limitatif de la présente invention, le modèle de langage 131 peut subir plusieurs phases d'apprentissage: une phase de préformation sur de grands ensembles de données publiques telle que la base de données 'Common Crawl' et une phase d'affinage sur des ensembles de données dédiés à une application spécifique, en particulier à celle d'obtention d'informations explicatives de fonctions ADAS ou de conduite automatisée du véhicule à partir d'une question posée par le conducteur et un contexte (intérieur et/ou extérieur) du véhicule tel qu'expliqué précédemment.

La figure 4 illustre schématiquement un dispositif 2 configuré pour contrôler un système de diffusion sonore dans un habitacle d'un véhicule de message relatif à des informations explicatives de fonctions d'aide à la conduite du véhicule ou de conduite automatisée du véhicule, selon un exemple de réalisation particulier et non limitatif de la présente invention.

Le dispositif 2 correspond par exemple à un dispositif embarqué dans le véhicule, par exemple un calculateur.

Le dispositif 2 est par exemple configuré pour la mise en œuvre d'au moins une étape du procédé décrit en regard des figures 1, 2, 3 et 5. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation d'au moins une étape du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique. Un voire plusieurs processeurs 20 peuvent être utilisés pour la mise en œuvre des unités de calcul ci-dessus.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le réseau de neurones profonds 1313 du modèle de langage 131 peut être entrainé par un dispositif distant, tel qu'un serveur ou une série de serveurs, en communication avec le dispositif 2 via un réseau de communication. Les paramètres internes du réseau de neurones profonds 1313 du modèle de langage 131 peuvent alors être transmis par ce dispositif distant à destination du dispositif 2 qui les reçoit. Le dispositif 2 est alors apte à mettre en œuvre le procédé de la figure 5.

Selon un exemple de réalisation particulier et non limitatif de la présente invention, le dispositif 2 comprend un bloc 22 d'éléments d'interface pour communiquer avec des dispositifs externes, par exemple un serveur distant de fourniture de conditions de trafic routier et ou de prévisions météorologiques. Les éléments d'interface du bloc 22 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;

- interface USB (de l'anglais « Universal Serial Bus » ou « Bus Universel en Série » en français) ;

- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données, par exemple des paramètres internes du réseau de neurones profonds entrainé 1313 ou des données représentatives d'un scénario de conduite, d'un environnement routier autour du véhicule et/ou de conditions de circulation routière et environnementale, sont par exemples chargées vers le dispositif 2 via l'interface du bloc 802 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que le système de perception de l'environnement routier extérieur proche du véhicule, ledit au moins un système de capture de données contextuelles, le système de détection d'émotion du conducteur, le système de reconnaissance vocale) via un canal de communication 24. L'interface de communication 23 correspond par exemple à un transmetteur configuré pour transmettre et recevoir des informations et/ou des données via le canal de communication 24. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Des paramètres internes du réseau de neurones profonds 1313 entrainé peuvent être reçus via l'interface de communication 23.

Selon un exemple de réalisation particulier et non limitatif de la présente invention, le dispositif 2 peut fournir des signaux de sortie à un ou plusieurs dispositifs externes, tels qu'un écran d'affichage 25, tactile ou non, un ou des haut-parleurs 26 et/ou d'autres périphériques 27 via respectivement des interfaces de sortie 28, 29 et 30. Selon une variante, l'un ou l'autre des dispositifs externes est intégré au dispositif 2.

La figure 5 illustre un organigramme des différentes étapes d'un procédé de contrôle d'un système de diffusion sonore dans un habitacle d'un véhicule de message relatif à des informations explicatives de fonctions d'aide à la conduite du véhicule ou de conduite automatisée du véhicule, selon un exemple de réalisation particulier et non limitatif de la présente invention.

Dans une étape 51, la première donnée 100 de type texte est obtenue à partir du système de reconnaissance vocale 10.

Dans une étape 52, la deuxième donnée 110 de type texte est obtenue à partir dudit au moins un système de capture de données contextuelles 11.

Dans une étape 53, la troisième donnée 120 de type texte est obtenue à partir du système de fusion de données de type texte 12 à partir de la première donnée 100 et de la deuxième donnée 110.

Dans une étape 54, la troisième donnée 120 est soumise au système conversationnel 13.

Dans une étape 55, la quatrième donnée 130 est obtenue à partir du système conversationnel 13.

Dans une étape 56, le système de diffusion sonore 14 est contrôlé pour diffuser la quatrième donnée 130 dans l'habitacle du véhicule.

Selon une variante, les variantes et exemples décrites en relation avec les figures 1 à 3 s'appliquent aux étapes du procédé de la figure 5.

Bien entendu, la présente invention ne se limite pas aux exemples de réalisation décrits ci-avant mais s'étend à un procédé de contrôle d'un système de diffusion sonore dans un habitacle d'un véhicule de message relatif à des informations explicatives de fonctions d'aide à la conduite du véhicule ou de conduite automatisée du véhicule, qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 2 de la figure 4.

**Revendications**

1. Procédé de contrôle d'un système de diffusion sonore dans un habitacle d'un véhicule, de message relatif à des informations explicatives de fonctions d'aide à la conduite du véhicule ou de conduite automatisée du véhicule, ledit procédé étant mis en œuvre par au moins un processeur et comprenant les étapes suivantes :

   - obtention (51), via un système de reconnaissance vocale, d'une première donnée (100) de type texte représentative d'une question posée par un occupant du véhicule et relative à des informations explicatives de l'une desdites fonction d'aide à la conduite du véhicule ou de conduite automatisée du véhicule ;
   - obtention (52), à partir d'au moins un système de capture de données contextuelles, d'une deuxième donnée (110) de type texte relative à un contexte actuel de conduite du véhicule ;
   - obtention (53), à partir d'un système de fusion de données de type texte, d'une troisième donnée (120) de type texte à partir de la première donnée (100) et de la deuxième donnée (110) toutes deux de type texte ;

- soumission (54) de la troisième donnée (120) à un système conversationnel basé sur un modèle de langage ayant accès à une base de donnée comprenant des données représentatives des informations explicatives des fonctions d'aide à la conduite du véhicule ou de conduite automatisée du véhicule ;

- obtention (55), à partir du système conversationnel, d'une quatrième donnée (130) représentative d'une réponse relative aux informations explicatives des fonctions d'aide à la conduite du véhicule ou de conduite automatisée du véhicule de la base de données correspondantes à la troisième donnée (120) ;

- contrôle (56) du système de diffusion sonore pour diffusion la quatrième donnée (130) dans l'habitacle du véhicule.

2. Procédé selon la revendication 1, pour lequel la deuxième donnée comprend au moins un mot ou une séquence de mots du langage naturel représentatif d'un contexte extérieur au véhicule, ledit contexte extérieur étant obtenu à partir d'une position géographique courante du véhicule.

3. Procédé selon la revendication 2, pour lequel le contexte extérieur est défini par l'une des données suivantes ou l'une de leurs combinaisons ;

    - une donnée représentative d'un scénario de conduite ;
    - une donnée représentative de conditions de circulation routière et environnementale.

4. Procédé selon l'une des revendications précédentes, pour lequel la deuxième donnée comprend un mot ou une séquence de mots du langage naturel représentatif d'un contexte intérieur du véhicule, ledit contexte intérieur étant obtenu à partir d'au moins un capteur embarqué du véhicule.

5. Procédé selon la revendication 4, pour lequel le contexte intérieur est défini par l'une des données suivantes ou l'une de leurs combinaisons :

    - une donnée représentative d'une vitesse du véhicule ;
    - une donnée représentative d'une accélération du véhicule ;
    - une donnée représentative d'une activation de l'une des fonctions ADAS ou de conduite automatisée du véhicule ;
    - une donnée représentative d'une émotion du conducteur du véhicule ;

    - une donnée représentative du nombre d'occupants du véhicule ;
    - une donnée représentative d'un nombre d'occupants du véhicule en train de discuter ;
    - une donnée représentative d'un environnement routier autour du véhicule.

6. Procédé selon l'une des revendications précédentes, pour lequel le modèle de lange comprend un réseau de neurones profond entrainé.

7. Dispositif (2) de contrôle d'un système de diffusion sonore dans un habitacle d'un véhicule, de message relatif à des informations explicatives de fonctions d'aide à la conduite du véhicule ou de conduite automatisée du véhicule, ledit dispositif (2) comprenant une mémoire (21) associée à au moins un processeur (20) configuré pour la mise en œuvre des étapes du procédé selon l'une quelconque des revendications 1 à 6.

8. Programme d'ordinateur comportant des instructions pour la mise en œuvre du procédé selon l'une quelconque des revendications 1 à 6, lorsque ces instructions sont exécutées par un processeur.

9. Support d'enregistrement lisible par un ordinateur sur lequel est enregistré un programme d'ordinateur comprenant des instructions pour l'exécution des étapes du procédé selon l'une quelconque des revendications 1 à 6.

10. Véhicule comprenant un dispositif selon la revendication 7.

[Fig. 1]

[Fig. 2]

[Fig. 3]

[Fig. 4]

[Fig. 5]

Europäisches Patentamt

European Patent Office

Office européen des brevets

**RAPPORT DE RECHERCHE EUROPEENNE**

Numéro de la demande

**EP 25 19 1684**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2024/095460 A1 (XU PENG [US] ET AL) 21 mars 2024 (2024-03-21) * alinéas [0028], [0068], [0075]; figures 1, 3 * ----- | 1-10 | INV. B60K35/10 B60K35/26 G06F40/30 G10L13/02 |
| A | US 2014/136013 A1 (WOLVERTON MICHAEL J [US] ET AL) 15 mai 2014 (2014-05-15) * le document en entier * ----- | 1-10 | G10L13/027 G10L15/22 G06F40/35 G10L15/26 |
| A | DE 10 2010 008355 A1 (VOLKSWAGEN AG [DE]) 18 août 2011 (2011-08-18) * le document en entier * ----- | 1-10 | |

DOMAINES TECHNIQUES RECHERCHES (IPC)

B60K
G06F
G10L
B60W

Le présent rapport a été établi pour toutes les revendications

| Lieu de la recherche | Date d'achèvement de la recherche | Examinateur |
|---|---|---|
| Munich | 8 décembre 2025 | Erbel, Christoph |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 4 711 173 A1**

## ANNEXE AU RAPPORT DE RECHERCHE EUROPEENNE
## RELATIF A LA DEMANDE DE BREVET EUROPEEN NO.

EP 25 19 1684

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-12-2025

| Document brevet cité au rapport de recherche | Date de publication | Membre(s) de la famille de brevet(s) | Date de publication |
|---|---|---|---|
| US 2024095460 A1 | 21-03-2024 | CN 117725150 A<br>DE 102023124878 A1<br>JP 2024043564 A<br>US 2024095460 A1 | 19-03-2024<br>21-03-2024<br>01-04-2024<br>21-03-2024 |
| US 2014136013 A1 | 15-05-2014 | AUCUN | |
| DE 102010008355 A1 | 18-08-2011 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **VASWANI, A** ; **SHAZEER, N.** ; **PARMAR, N** ; **USZKOREIT, J.** ; **JONES, L.** ; **GOMEZ, A.** ; **KAISER, U.** ; **POLOSUKHIN, I.** Attention is All you Need. In Advances in Neural Information Processing Systems.. *Curran Associates, Inc.*, 2017

- **ROBBINS, H.** ; **S. MONRO**. A Stochastic Approximation Method. *In The Annals of Mathematical Statistics*, 1951, vol. 22 (3), 400-407